Europäisches Patentamt

European Patent Office

Office européen des brevets

(19)

(11) Publication number: **0 404 483**

**A1**

# (12) EUROPEAN PATENT APPLICATION

(21) Application number: **90306622.3**

(22) Date of filing: **18.06.90**

(51) Int. Cl.⁵: **B60B 21/12, B60C 15/028**

(30) Priority: **20.06.89 GB 8914123**

(43) Date of publication of application:
**27.12.90 Bulletin 90/52**

(84) Designated Contracting States:
**AT BE CH DE DK ES FR GR IT LI LU NL SE**

(71) Applicant: **Savage, Bernard John**
**12 Oakley Gardens, Chelsea**
**London SW3(GB)**

(72) Inventor: **Savage, Bernard John**
**12 Oakley Gardens, Chelsea**
**London SW3(GB)**

(74) Representative: **Jones, Graham H.**
**Graham Jones & Company 77 Beaconsfield**
**Road Blackheath**
**London SE3 7LG(GB)**

(54) **A band device for retaining a tyre on a wheel rim.**

(57) A band device (2) for retaining a tyre on a wheel rim in the event that the tyre should become deflated, which band device (2) comprises a pair of adjacent end portions (4, 6) which are joined together by fastener means (8), the fastener means (8) comprising a nut (16) and a bolt (18), the bolt (18) comprising a head (20) and a screw threaded shank (22), the nut (16) comprising a screw threaded hole (24) for receiving the shank (22) and a blind bore (26) which extends transversely of the screw threaded hole (24), and the blind bore (26) containing a locking insert (28) which is cut by the shank (22) as the shank (22) is screwed through the nut (16).

Fig.1.

EP 0 404 483 A1

# A BAND DEVICE FOR RETAINING A TYRE ON A WHEEL RIM

This invention relates to a band device for retaining a tyre on a wheel rim in the event that the tyre should become deflated.

Band devices for retaining a tyre on a wheel rim in the event that the tyre should become deflated are well known.

In accordance with the present invention there is provided a band device for retaining a tyre on a wheel rim in the event that the tyre should become deflated, which band device comprises a pair of adjacent end portions which are joined together by fastener means, the fastener means comprising a nut and a bolt, the bolt comprising a head and a screw threaded shank, the nut comprising a screw threaded hole for receiving the shank and a blind bore which extends transversely of the screw threaded hole, and the blind bore containing a locking insert which is cut by the shank as the shank is screwed through the nut.

The fastener means operates such that the locking insert is forced into the blind bore as the shank is screwed through the nut and thus cuts through the locking insert. The locking insert will usually be of circular cross section so that it is a good fit in the blind bore, The locking insert may be solid or it may be provided with a through bore as may be desired.

Usually, the nut bore will be crimpable to retain the locking insert in the blind bore. With such an arrangement, the locking insert is also forced into the open part of the blind bore as the shank is screwed through the nut and cuts through the locking insert. The crimping can be effected with any appropriate crimping tool such for example as a crimping tool which forms a cruxiform to pinch the nut around the open end of the blind bore over the end of the locking insert.

As the shank is screwed through the nut, the shank cuts through the locking insert and places the locking insert under pressure. A good secure connection of the shank in the nut is thus achieved and the shank can be unscrewed from the nut and screwed up again, whilst still being able to achieve a good secure connection, For example, the shank may be unscrewed from the nut for up to 14 times which is substantially equal to the use life of the band device, This is in contrast to many known band devices in which the shank can often only be removed from the nut once, whereafter a new fastener means is required.

Usually, the nut will be a tubular nut.

The locking insert will usually be made of a plastics material. The plastics material may be nylon. The locking insert may be sold under the trade mark NYLOCK. The nut and the bolt will usually be made of a metal.

The shank may be a fully threaded shank. Alternatively, the shank may be a partially threaded shank.

The head of the bolt will usually have a formation for receiving a tightening tool such for example as a spanner or the like. The head of the bolt may thus have external flats or an internal recess.

The fastener means may include a locking washer and an unthreaded nut. The unthreaded nut will usually be of substantially circular cross section so that it will have the same general cross sectional shape as the nut with the screw threaded hole. The locking washer is for stopping movement of the unthreaded nut. The unthreaded nut gives good engagement with the adjacent part of the band device.

Preferably, the unthreaded nut has a flat portion for receiving the locking washer. This gives good surface engagement between the locking washer and the unthreaded nut.

By using an unthreaded roller nut of circular cross section, maximum bearing pressure is able to be achieved on an angle member, in order to spread the load. The flat portion on the locking washer may be formed during the making of the washer or it may be machined or otherwise ground away. The locking washer, which is usually a flat locking washer, also helps to stop rotational movement of the bolt.

The combination of the locking insert, the locking washer and the correct tightening torque applied to the fastener means provides a high level of guarantee against the bolt becoming loose during operational service of the band device.

The band device may comprise first and second part circular band portions which together form a substantially complete circle and which together have two of the pairs of adjacent end portions, one of the pairs of the adjacent end portions being connected together by one of the fastener means which has a fully threaded shank, and the other of the pairs of the adjacent end portions being connected together by one of the fastener means which has a partially threaded shank.

A band device having the first and second part circular band portions connected together by the two different fastener means can advantageously enable the band device to be dynamically balanced during service. Because both bolts have at least some thread, the fastener means can be adjusted at both of the pairs of adjacent end portions to basically achieve a desired gap between each of the two pairs of adjacent end portions. However, if both of the connector means had fully threaded shanks, it is possible that a careless or inexperienced fitter could screw in the bolt at the first pair of adjacent end portions too far which could then damage a valve. By having the shank only partially threaded, this overtightening, for example on a slightly undersized wheel, can be avoided since the fitter is then required to tighten up the band device using the other bolt at the other pair of adjacent end portions.

The band device may be such that it has a plurality of inwardly projecting legs which are of circular cross section.

The legs may be made of a metal or a plastics material. The legs may be secured to the tyre band by any suitable and appropriate means. By varying the number of legs employed, the loading at the band device may be varied. More legs tend to increase the of friction available, with the greater friction helping to prevent turning movement of the band device during high speed travel. The legs can be altered to miss rivets which sometimes occur on wheels and can interfere with some known band devices.

The present invention also provides a wheel rim when provided with the band device.

The present invention further provides a complete wheel including the band device, the rim and the tyre, The tyre will usually be a tubeless tyre since the majority of tyres currently manufactured and sold are tubeless.

An embodiment of the invention will now be described solely by way of example and with reference to the accompanying drawings in which:

Figure 1 is a perspective view of a band device;

Figure 2 shows first fastener means forming part of the band device; and

Figure 3 shows second fastener means which also forms part of the band device.

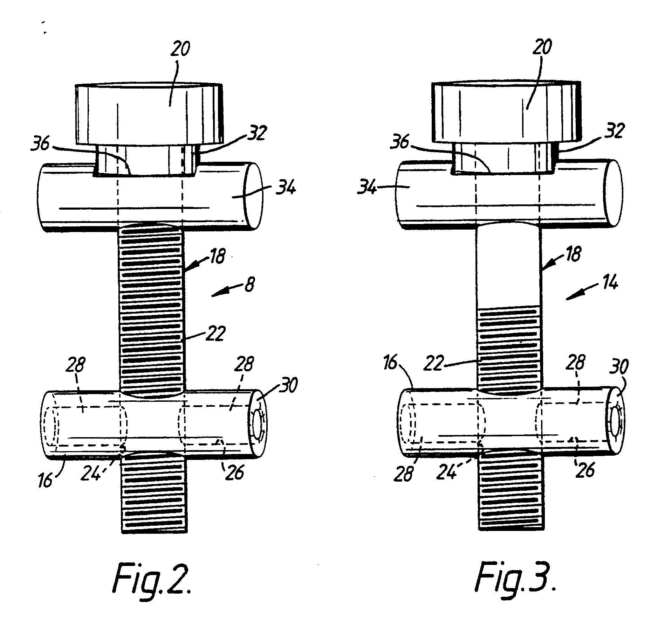

Referring to the drawings, there is shown a band device 2 for retaining a tubeless tyre (not shown) on a wheel rim (not shown) in the event that the tyre should become deflated. The band device 2 comprises a first pair of adjacent end portions 4, 6 which are joined together by fastener means 8 as shown in detail in Figure 2. The band device 2 also comprises a second pair of adjacent end portions 10,12 which are joined together by fastener means 14, which is shown in detail in Figure 3.

The fastener means 8 and 14 each comprise a nut 16 and a bolt 18.

The bolt 18 comprises a head 20 and a screw. threaded shank 22.

The nut 16 comprises a screw threaded hole 24 for receiving the screw threaded shank 22 so that the screw threaded shank 22 can be screwed in and out of the screw threaded hole 24. The nut 16 also comprises a blind bore 26 which extends transversely of the screw threaded hole 24 as shown. The blind bore 26 contains a plastics locking insert 28 which extends substantially the entire length of the blind bore 26. The locking insert 28 is cut by the shank 22 as the shank 22 is screwed through the nut 16.

The nut 16 is a tubular nut as shown and it is made of metal. The bolt 18 is also made of metal. The end 30 of the nut 16 is crimped over the end of the locking insert 28 so that the locking insert 28 is trapped in the blind bore 26. Thus, as the shank 22 is screwed through the nut 16, the plastics material of the locking insert 28 is compressed and forced to either side of the shank 22 to cause the shank 22 to be a very secure fit in the nut 16. Furthermore, the shank 22 can be unscrewed from the nut 16 if it is desired to remove the tyre band device 2 for the purpose of changing a tyre, .and the shank 22 can repeatedly be screwed back into the nut 16 always giving a good secure fit of the shank 22 in the nut 16.

The head 20 of the bolt 18 has an appropriate formation for enabling the bolt 18 to be tightened. Usually, the head 20 will be a security head 20.

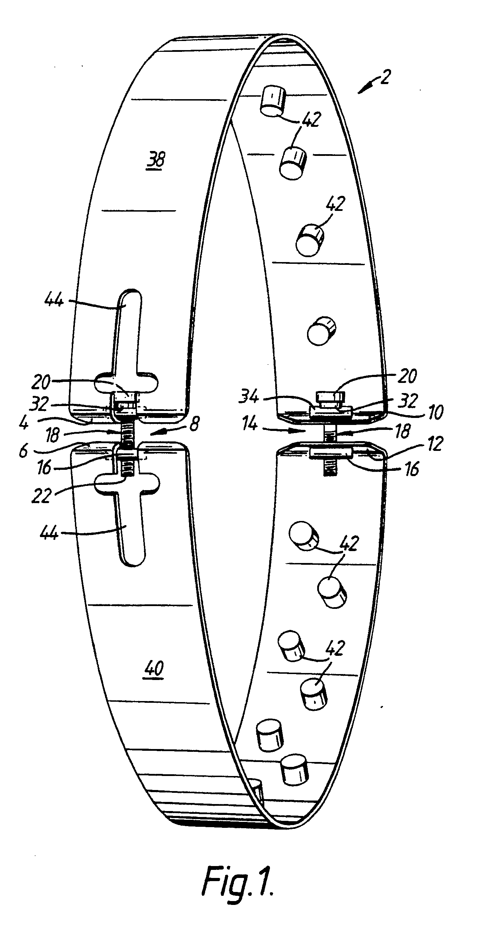

The tyre band device 2 includes a flat locking washer 32 which is a heavy duty locking washer. The band device 2 further comprises an unthreaded roller nut 34. The nut 34 is of circular cross section and it gives good engagement with the remainder of the band device 2 as can be seen from Figure 1. The nut 34 has a flat portion 36 for receiving the locking washer 32 to ensure that the locking washer 32 makes good surface engagement with the nut 34. The locking washer 32 and the nut 34 help to ensure that the bolt 18 does not rotate during use of the band device 2.

It will be seen from Figure 1 that the band device 2 comprises first and second part circular band portions 38,40. The first pair of adjacent end portions 4, 6 are connected together by the fastener means 8 shown in Figure 2. This fastener means 8 is such that the bolt 18 is a fully threaded bolt 18. The second pair of adjacent end portions 10,12 are connected together by the fastener means 14 and this fastener means 14, as shown in Figure 3 is such that the bolt 18 is only a partially threaded bolt 18. The fastener means 14 is used at the valve position of the tyre. Because the fastener means 14 only has a partially threaded bolt 18, it will be apparent that the bolt 18 cannot be over tightened to bring the second pair of adjacent end portions 10,12 too close together. This thus prevents a careless or inexperienced fitter pinching or otherwise damaging the valve (not shown) of the tyre. There is a limit to which the partially threaded bolt 18 can be tightened up and then the fitter is required to move to the bolt 18 of the fastener means 8. In this way, the band portion 38,40 can be appropriately tightened so that, for example, the spacing between the first pair of adjacent end portions 4, 6 and the spacing between the second pair of adjacent end portions 10,12 can be the same to substantially dynamically balance the band device 2.

As can be seen from Figure 1, the band device 2 has a plurality of inwardly projecting threads 42 which are of cross circular cross section. The legs 42 are solid legs and they may be made from metal or a plastics material. The legs are arranged on the underside of the band device 2 as shown and they may be in such a pattern or density as to enable the band device 2 to be fitted either to symmetric or asymmetric profile wheels of the same diameter. The legs 42 may also enable variable levels of support to be applied to the band device 2. depending upon the axial load. The legs 42 may also provide a quantifiable area of contact between the legs 42 and the base of the wheel so as to ensure maximum resistance to rotational movement of the band device 2 on the wheel under different driving conditions.

The concept of using band devices as well obstructors is well known as an effective method of preventing a tyre from dismounting off a standard drop-centre wheel after tyre failure. The tyre band device 2 of the present invention is able to increase the range of wheels of a given diameter to which a standard band device made for the same diameter wheel may be fitted, both in terms of wheel profile shape and axial weight. Many known previous band devices have had to rely on fixed width supports, or a central extruded circular leg to support the band device in the well. The band device 2, by use of the fastener means 8, 14 is able to reduce the risk of damaging the tyre valve during fitting, and of disturbing the dynamic balance after the band device 2 has been fitted. The use of the locking insert 28 operating in the blind bore 26 gives a very positive securing action of the fastener means 8, 14 and thus reduces the risk of the band device 2 becoming loose on a wheel during use.

It is to be appreciated that the embodiment of the invention described above with reference to the accompanying drawings has been given by way of example only and that modifications may be effected. Thus, for example, the number and positioning of the legs 42 may be varied. Also, although the locking insert 28 is preferably made of nylon, it may be made of other plastics materials if desired. The shape of the adjacent end portions 4, 6 and 10,12 may be varied if desired. Similarly, the, shape of the apertures 44 may be varied although these apertures give easy access to the fastener means 8.

The present invention also extends to each and every described feature taken singly or in any combination.

**Claims**

1. A band device for retaining a tyre on a wheel rim in the event that the tyre should become deflated, which band device comprises a pair of adjacent end portions which are joined together by fastener means, the fastener means comprising a nut and a bolt, the bolt comprising a head and a screw threaded shank, the nut comprising a screw threaded hole for receiving the shank and a blind bore which extends transversely of the screw threaded hole, and the blind bore containing a locking insert which is cut by the shank as the shank is screwed through the nut.

2. A band device according to claim 1 in which the locking insert is of circular cross section.

3. A band device according to claim 1 or claim 2 in which the nut is crimpable to retain the locking insert in the blind bore.

4. A band device according to any one of the preceding claims in which the nut is a tubular nut.

5. A band device according to any one of the preceding claims in which the locking insert is made of a plastics material.

6. A band device according to any one of the preceding claims in which the head of the bolt has a formation for receiving a tightening tool.

7. A band device according to any one of the preceding claims in which the fastener means includes a locking washer and an unthreaded nut.

8. A band device according to claim 7 in which the unthreaded nut has a flat portion for receiving the locking washer.

9. A band device according to any one of the preceding claims and comprising first and second part circular band portions which together form a substantially complete circle and which together have two of the pairs of adjacent end portions, one of the pairs of the adjacent end portions being connected together by one of the fastener means which has a fully threaded shank, and the other of the pairs of the adjacent end portions being connected together by one of the fastener means which has a partially threaded shank.

10. A band device according to any one of the preceding claims and having a plurality of inwardly projecting legs which are of circular cross section.

Fig.1.

*Fig.2.*

*Fig.3.*

## DOCUMENTS CONSIDERED TO BE RELEVANT

EP 90306622.3

| Category | Citation of document with indication, where appropriate, of relevant passages | Relevant to claim | CLASSIFICATION OF THE APPLICATION (Int. Cl.⁵) |
|---|---|---|---|
| Y | <u>GB - A - 2 117 331</u> (SAVAGE) * Totality * | 1-4,9, 10 | B 60 B 21/12 B 60 C 15/028 |
| A | | 1,6-8 | |
| Y | <u>US - A - 2 462 603</u> (BOOTS) * Totality * -- | 1-4 | |
| Y | <u>GB - A - 2 038 727</u> (TSB INTERNATIONAL LICENCE N.V.) * Fig. 1,4,6,7 * -- | 9 | |
| Y | <u>US - A - 4 784 202</u> (WHITE) * Fig. 1,2 * ---- | 10 | |

|  | TECHNICAL FIELDS SEARCHED (Int. Cl.⁵) |
|---|---|
| | B 60 B B 60 C F 16 B |

The present search report has been drawn up for all claims

| Place of search | Date of completion of the search | Examiner |
|---|---|---|
| VIENNA | 19-09-1990 | WIDHALM |